# EUROPEAN PATENT APPLICATION

(11) **EP 4 159 300 A1**
(43) Date of publication of application: **05.04.2023**
(21) Application number: 20937315.8
(22) Date of filing: 29.05.2020
(51) Int. Cl.: B01D 46/00, B01D 53/06, B01J 20/28

(54) **ADSORPTION UNIT, ADSORPTION PROCESSING DEVICE, AND PROCESSING SYSTEM**

(71) Applicant: TOYOBO CO., LTD., Osaka-shi Osaka 5300001 (JP)
(72) Inventor: MIZUTANI, Akinori, Otsu-shi, Shiga 520-0292 (JP); KOHNO, Daiki, Osaka-shi, Osaka 530-8230 (JP)
(74) Representative: Vossius & Partner Patentanwälte Rechtsanwälte mbB
(86) International application number: PCT/JP2020/021344
(87) International publication number: WO 2021/240781

(57) **Abstract**

An adsorption unit (30) includes: a multilayer body (200A) in which a plurality of plate-shaped adsorption elements (200) each having a honeycomb structure are laminated; a frame body (30A) that communicates an inflow side opening and a discharge side opening, and holds a plurality of the multilayer bodies (200A) in a multilayer state so that a flow path of a fluid to be treated is provided. With this configuration, it is possible to provide the adsorption unit (30) unit that suppresses leakage of a fluid to be treated from the adsorption elements (200), and has a configuration in which the adsorption elements (200) may not be easily damaged. Further, by using the adsorption unit (30) of the present disclosure, it is possible to provide an adsorption treatment device and a treatment system capable of treating the fluid to be treated with higher performance.

## Description

### TECHNICAL FIELD

The present invention relates to an adsorption treatment device and a treatment system each of which adopts an adsorption unit, and more particularly to a structure of the adsorption unit.

### BACKGROUND ART

Conventionally, as a method for treating a fluid to be treated of a large flow rate and containing a low-concentration substance to be treated, there is an adsorption treatment method. As an example of this treatment method, there is a concentration method with which a large air volume of a fluid to be treated is caused to flow into an adsorption region of an adsorption unit including a continuously rotating adsorption element to adsorb and remove a substance to be treated contained in the fluid to be treated.

On the other hand, a heated fluid of a small amount is caused to flow into a desorption region separate from the adsorption region into which the fluid to be treated flows, and the substance to be treated contained in the fluid to be treated of a large air volume is moved to the heated fluid of a small air volume. As described above, it is possible to reduce the total treatment cost by generating a small air volume of so-called concentrated fluid containing a high concentration substance to be treated, and by separately subjecting the concentrated fluid to secondary treatment by a treatment apparatus provided outside.

An adsorption unit, an adsorption treatment device, and an organic solvent recovery system employing such a treatment technique are disclosed in Japanese Patent Laying-Open No. 2019-209267 (PTL 1), Japanese Patent Laying-Open No. 2019-209268 (PTL 2), WO 2017/006785 (PTL 3), WO 2016/189958 (PTL 4), Japanese Patent Laying-Open No. 2012-166155 (PTL 5), and the like. Each of these documents describes an adsorption treatment device having a practical size and capable of increasing the treatment flow rate of the fluid to be treated.

### CITATION LIST

### PATENT LITERATURE

PTL 1: Japanese Patent Laying-Open No. 2019-209267
PTL 2: Japanese Patent Laying-Open No. 2019-209268
PTL 3: WO 2017/006785
PTL 4: WO 2016/189958
PTL 5: Japanese Patent Laying-Open No. 2012-166155

### SUMMARY OF INVENTION

### TECHNICAL PROBLEM

However, no specific structure of the adsorption unit including the adsorbent is disclosed. In recent years, there has been a demand for an adsorption unit for treating a fluid to be treated with higher performance.

The present invention has been made to solve the above problems, and an object of the present invention is to provide an adsorption unit that suppresses leakage of a fluid to be treated from an adsorption element, and has a configuration in which the adsorption element may not be easily damaged. Still another object is to provide an adsorption treatment device and a treatment system adopting the adsorption unit.

### SOLUTION TO PROBLEM

An adsorption unit according to the present disclosure includes: a multilayer body in which a plurality of plate-shaped adsorption elements each having a honeycomb structure are laminated; a frame body that communicates an inflow side opening and a discharge side opening, and holds a plurality of the multilayer bodies in a multilayer state such that a flow path of a fluid to be treated is provided.

The adsorption unit according to another embodiment further includes: a partition body that partitions the plurality of multilayer bodies.

In the adsorption unit according to another embodiment, the multilayer body includes the adsorption elements are fixed to and integrated with each other.

In the adsorption unit according to another embodiment, an end portion of the partition body is fixed to the frame body using a fastening member.

In the adsorption unit according to another embodiment, the fastening member is a rivet.

In the adsorption unit according to another embodiment, the frame body includes a tubular frame defining the inflow side opening and the discharge side opening, and a sealing member is annularly disposed on an end surface of at least one of the inflow side opening and the discharge side opening of the frame.

In the adsorption unit according to another embodiment, a pair of wall portions are provided such that an annular groove is provided on the end surface of at least one of the inflow side opening and the discharge side opening, and the sealing member is disposed in the annular groove.

In the adsorption unit according to another embodiment, the end surface of at least one of the inflow side opening and the discharge side opening is provided with a protection member that covers the inflow side opening and the discharge side opening without hindering inflow and outflow of the fluid to be treated.

In the adsorption unit according to another embodiment, the protection member has a lattice shape or a net shape.

An adsorption treatment device according to the present disclosure is provided with an adsorption unit that treats a substance to be treated contained in a fluid to be treated, and the adsorption treatment device includes: an adsorption region that causes the adsorption unit to adsorb a substance to be treated contained in the fluid to be treated; and a desorption region for desorbing the substance to be treated adsorbed to the adsorption unit from the adsorption unit, wherein the adsorption unit is any one of the adsorption units described above.

In the adsorption treatment device according to another embodiment, the adsorption unit includes a plurality of adsorption units disposed around a rotation center, and the plurality of adsorption units alternately move between the adsorption region and the desorption region by the adsorption units rotating annularly about the rotation center.

A treatment system according to the present disclosure includes: the adsorption treatment device described above; and a pre-treatment device and/or a post-treatment device, the pre-treatment device treating a fluid to be treated before the fluid to be treated is introduced into the adsorption treatment device, the post-treatment device treating a desorbed gas discharged from the adsorption treatment device.

### ADVANTAGEOUS EFFECTS OF INVENTION

According to an adsorption unit of the present disclosure, leakage of a fluid to be treated from an adsorption element is suppressed, and the adsorption element may not be easily damaged. Furthermore, according to an adsorption treatment device and a treatment system of the present disclosure, it is possible to treat the fluid to be treated with higher performance by using the adsorption unit of the present disclosure.

### BRIEF DESCRIPTION OF DRAWINGS

Fig. 1 is a longitudinal sectional view of an adsorption treatment device according to a first embodiment.
Fig. 2 is a cross-sectional view taken along line II-II illustrated in Fig. 1.
Fig. 3 is an enlarged cross-sectional view of a main part of a cylindrical rotor illustrated in Fig. 1.
Fig. 4 is a view illustrating a honeycomb shape which is a shape of an adsorption element in the embodiment.
Fig. 5 is a partially enlarged view of an adsorption unit adopting a honeycomb shape which is a shape of an adsorption element in the first embodiment.
Fig. 6 is an overall perspective view of the adsorption unit according to the first embodiment.
Fig. 7 is an overall perspective view of an adsorption unit having another configuration according to a second embodiment.
Fig. 8 is an overall perspective view of an adsorption unit having another configuration according to a third embodiment.

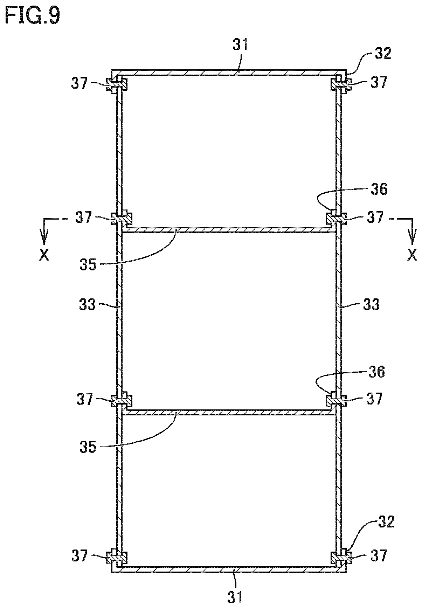

Fig. 9 is a cross-sectional view taken along line IX-IX in Fig. 8.

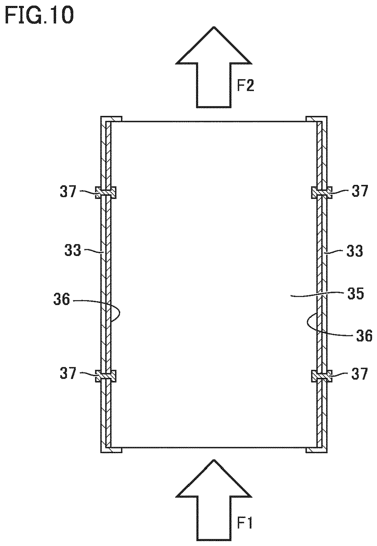

Fig. 10 is a transverse cross-sectional view illustrating a structure of a partition body in a cross section taken along line X-X in Fig. 9.
Fig. 11 is an overall perspective view illustrating an adsorption unit according to a fourth embodiment.
Fig. 12 is an overall perspective view illustrating an adsorption unit according to a fifth embodiment.
Fig. 13 is a view illustrating a transverse cross-sectional structure of a sealing member provided in the adsorption unit in the fifth embodiment.
Fig. 14 is a view illustrating another transverse cross-sectional structure of the sealing member provided in the adsorption unit in the fifth embodiment.
Fig. 15 is a view illustrating another transverse cross-sectional structure of the sealing member provided in the adsorption unit in the fifth embodiment.
Fig. 16 is a view illustrating another transverse cross-sectional structure of the sealing member provided in the adsorption unit in the fifth embodiment.
Fig. 17 is an overall perspective view illustrating a configuration of an adsorption unit according to a sixth embodiment.
Fig. 18 is a view illustrating a transverse cross-sectional structure of an annular groove and a sealing member provided in the adsorption unit in the sixth embodiment.
Fig. 19 is a view illustrating a transverse cross-sectional structure of another annular groove and another sealing member provided in the adsorption unit in the sixth embodiment.
Fig. 20 is a view illustrating a transverse cross-sectional structure of another annular groove and another sealing member provided in the adsorption unit in the sixth embodiment.
Fig. 21 is a view illustrating a transverse cross-sectional structure of another annular groove and another sealing member provided in the adsorption unit in the sixth embodiment.
Fig. 22 is an overall perspective view illustrating a configuration of an adsorption unit according to a seventh embodiment.

### DESCRIPTION OF EMBODIMENTS

Hereinafter, an adsorption unit, an adsorption treatment device, and a treatment system according to embodiments of the present invention will be described with reference to the drawings. In the embodiments described below, when referring to numbers, amounts, and the like, the scope of the present invention is not necessarily limited to these numbers, amounts, and the like unless otherwise specified. The same components and corresponding components are denoted by the same reference numerals, and redundant description may not be repeated. It is intended from the beginning to appropriately combine and use configurations in the embodiments.

### [First embodiment: adsorption treatment device 100]

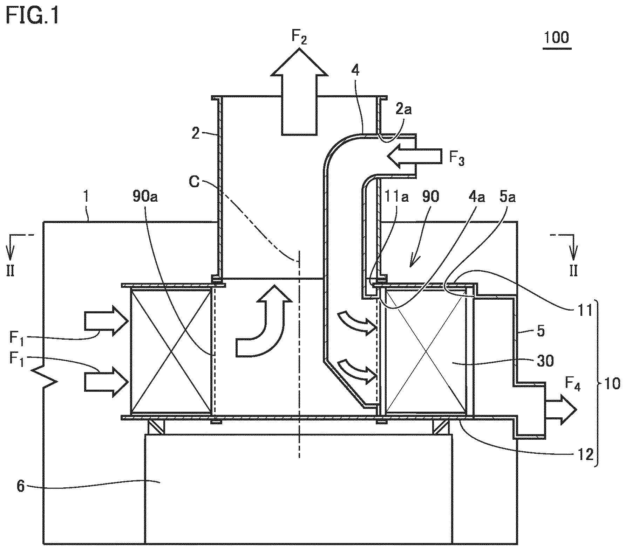

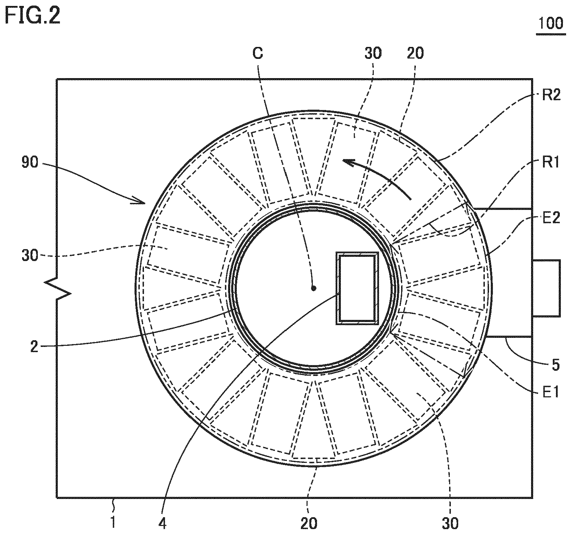

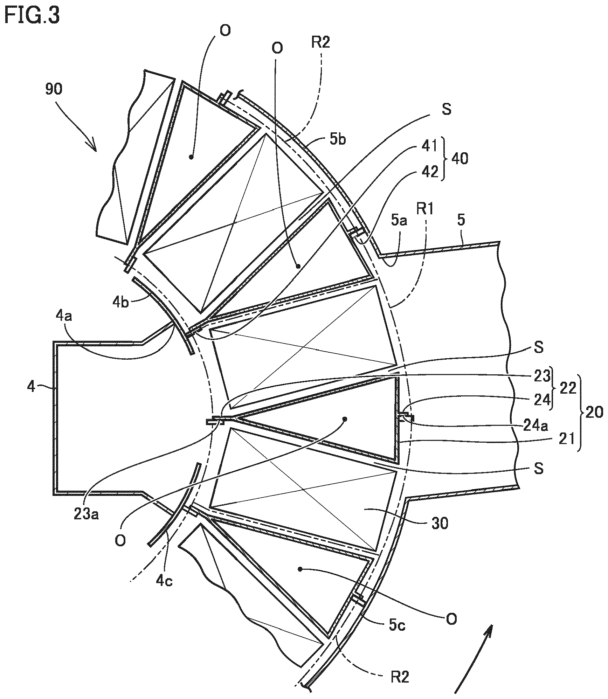

Fig. 1 is a longitudinal sectional view of an adsorption treatment device 100 according to the present embodiment. Fig. 2 is a cross-sectional view taken along line II-II illustrated in Fig. 1. Fig. 3 is an enlarged cross-sectional view of a main part of a cylindrical rotor 90 illustrated in Fig. 1. Adsorption treatment device 100 according to the present embodiment will be described with reference to Figs. 1 to 3.

As shown in Fig. 1, adsorption treatment device 100 according to the present embodiment adsorbs and removes a substance to be treated contained in a fluid to be treated F1 of a large air volume supplied into a treatment chamber 1 by using an adsorption unit 30 to be described later, and discharges clean air F2 that has been cleaned. Adsorption treatment device 100 blows a small amount of heated fluid F3 to adsorption unit 30 on which the substance to be treated adsorbed and removed is adsorbed, and thereby desorbs the substance to be treated from adsorption unit 30 and discharging the substance to be treated as a concentrated fluid F4.

Adsorption treatment of a substance to be treated is performed in a second region R2 (see Fig. 2) of cylindrical rotor 90 described later. Second region R2 corresponds to an adsorption region. The desorption treatment of the substance to be treated is performed in a first region R1 (see Fig. 2) of cylindrical rotor 90 described later. First region R1 corresponds to a desorption region. By the rotation of cylindrical rotor 90 about a cylinder axis C, the adsorption treatment is performed on adsorption unit 30 located in second region R2 after passing through first region R1. Second region R2 corresponds to an adsorption region.

The desorption treatment is performed, again after the adsorption treatment, on adsorption unit 30 located in first region R1 after passing through second region R2. As described above, in adsorption treatment device 100, the adsorption treatment and the desorption treatment are continuously performed.

As shown in Figs. 1 to 3, adsorption treatment device 100 includes cylindrical rotor 90 as a rotating body, a first flow path formation member 2, an inner peripheral side flow path formation member 4 as an inlet side flow path formation member, and an outer peripheral side flow path formation member 5 as an outlet side flow path formation member.

Cylindrical rotor 90 is installed in treatment chamber 1. Cylindrical rotor 90 is provided so that the fluid can flow in the radial direction. Cylindrical rotor 90 is provided rotatably about cylinder axis C. Cylindrical rotor 90 is rotatably supported by a plurality of support members 6 such as supporting posts such that cylinder axis C is directed in the vertical direction.

Cylindrical rotor 90 includes a pair of disks 10, a plurality of partition plates 20, and a plurality of adsorption units 30.

The pair of disks 10 is disposed so as to face each other. The pair of disks 10 include a first disk 11 and a second disk 12. An opening 11a is provided in a central portion of first disk 11. First disk 11 and second disk 12 are arranged to face each other such that center positions thereof overlap each other when viewed from the direction of cylinder axis C of cylindrical rotor 90. First disk 11 and second disk 12 are provided at a distance so that partition plates 20 and adsorption unit 30 can be disposed therebetween.

The plurality of partition plates 20 partition a space between the pair of disks 10 into a plurality of space portions S (see Fig. 3) independent from each other in the circumferential direction. Specifically, the plurality of partition plates 20 partition the space between the pair of disks 10 in the portion where first disk 11 and second disk 12 overlap when viewed from the direction of cylinder axis C into the plurality of space portions S independent from each other in the circumferential direction.

The plurality of partition plates 20 are arranged such that centers O (see Fig. 3) thereof are arranged at a predetermined pitch in the circumferential direction. The plurality of partition plates 20 are attached between the pair of disks 10 air-tightly and/or liquid-tightly in the direction of cylinder axis C.

The plurality of adsorption units 30 are respectively accommodated in the plurality of independent space portions S. The plurality of adsorption units 30 are arranged in the circumferential direction at a predetermined pitch. Each of adsorption units 30 has, for example, a rectangular block shape.

Adsorption units 30 are configured by an adsorbent containing any of activated alumina, silica gel, activated carbon, and zeolite. Preferably, granular, powder, or honeycomb activated carbon or zeolite is used as the adsorbent. Activated carbon and zeolite are excellent in adsorbing and desorbing low-concentration organic compounds. In addition, by providing in the honeycomb shape, the pressure loss of the fluid can be reduced, and the treatment capacity can be increased. Furthermore, clogging due to a solid such as dust can be suppressed. A detailed configuration of adsorption units 30 will be described later.

In cylindrical rotor 90 configured by alternately arranging the plurality of partition plates 20 and the plurality of adsorption units 30 in the circumferential direction between the pair of disks 10 to provide a cylindrical shape, a central space 90a is defined so as to communicate with opening 11a of first disk 11.

One end side of first flow path formation member 2 is configured to allow cylindrical rotor 90 to rotate about cylinder axis C while airtightly maintaining the inside of first flow path formation member 2 and central space 90a of cylindrical rotor 90. Specifically, for example, a flange is provided on the one end side of first flow path formation member 2, and ab annular sealing member is sandwiched between the flange and first disk 11 located at the peripheral edge of opening 11a. The other end side of first flow path formation member 2 is drawn out of treatment chamber 1.

In central space 90a which is on the inner peripheral side of cylindrical rotor 90, inner peripheral side flow path formation member 4 is disposed. Outer peripheral side flow path formation member 5 is disposed on the outer peripheral side of cylindrical rotor 90. Inner peripheral side flow path formation member 4 and outer peripheral side flow path formation member 5 are disposed to face each other on the inner peripheral side and the outer peripheral side of cylindrical rotor 90 so as to sandwich a part of cylindrical rotor 90 in the circumferential direction.

Inner peripheral side flow path formation member 4 extends in central space 90a along cylinder axis C and extends from opening 11a toward the outside of cylindrical rotor 90.

An inner peripheral side opening end portion 4a facing the inner peripheral side of cylindrical rotor 90 is provided on one end side of inner peripheral side flow path formation member 4. An opening surface of inner peripheral side opening end portion 4a is provided so as to face a partial region on the inner peripheral side of cylindrical rotor 90 in the circumferential direction. The opening surface is provided between first disk 11 and second disk 12 of inner peripheral side flow path formation member 4 so as to face the inner peripheral side of cylindrical rotor 90 in the direction of cylinder axis C. The other end side of inner peripheral side flow path formation member 4 protrudes from an opening 2a provided in first flow path formation member 2 to the outside of first flow path formation member 2.

An outer peripheral side opening end portion 5a facing the outer peripheral side of cylindrical rotor 90 is provided on one end side of outer peripheral side flow path formation member 5. An opening surface of outer peripheral side opening end portion 5a is provided so as to face a partial region on the outer peripheral side of the cylindrical rotor in the circumferential direction. The opening surface is provided between first disk 11 and second disk 12 so as to face the outer peripheral side of cylindrical rotor 90 in the direction of cylinder axis C.

As shown in Fig. 2, cylindrical rotor 90 includes first region R1 (see Fig. 2) and second region R2 (see Fig. 2) partitioned in the circumferential direction. The plurality of adsorption units 30 alternately move between first region R1 and second region R2 as cylindrical rotor 90 rotates.

As shown in Fig. 3, first region R1 is defined by airtightly communicating a part of the plurality of space portions S rotating along with the rotation of cylindrical rotor 90 to inner peripheral side flow path formation member 4 and outer peripheral side flow path formation member 5. As described later, when the fluid flows from the inner peripheral side toward the outer peripheral side in first region R1, the inner peripheral side of first region R1 corresponds to an inlet portion E1, and the outer peripheral side of first region R1 corresponds to an outlet portion E2.

Cylindrical rotor 90 includes sealing members 40 respectively provided on the plurality of partition plates 20. The plurality of sealing members 40 are arranged side by side in the rotational direction of cylindrical rotor 90 (arrow direction in Figs. 2 and 3). Each of sealing members 40 includes an inner side sealing member 41 and an outer side sealing member 42. Each of the plurality of partition plates 20 includes an installation portion 22 for installing a main body 21 and sealing members 40. Main body 21 has, for example, a triangular tube shape. Installation portion 22 includes an inner peripheral side installation portion 23 and an outer peripheral side installation portion 24.

Inner peripheral side installation portion 23 has a plate shape. Inner peripheral side installation portion 23 is provided to extend along cylinder axis C. Inner peripheral side installation portion 23 is provided so as to protrude radially inward of cylindrical rotor 90 from a top side portion of main body 21 located on the inner peripheral side of cylindrical rotor 90. Inner peripheral side installation portion 23 may be configured integrally with main body 21 or separately from main body 21. Inner peripheral side installation portion 23 has an inner peripheral side installation surface 23a for installing inner side sealing member 41 described later. Inner peripheral side installation surface 23a intersects with the rotational direction of cylindrical rotor 90.

Outer peripheral side installation portion 24 has a plate shape. Outer peripheral side installation portion 24 is provided to extend along cylinder axis C. Outer peripheral side installation portion 24 is provided so as to protrude radially outward of cylindrical rotor 90 from a side surface of main body 21 located on the outer peripheral side of cylindrical rotor 90. Outer peripheral side installation portion 24 may be configured integrally with main body 21 or separately from main body 21. When outer peripheral side installation portion 24 is configured separately from main body 21, outer peripheral side installation portion 24 has a shape such as an L shape that can be attached to main body 21. Outer peripheral side installation portion 24 has an outer peripheral side installation surface 24a for installing outer side sealing member 42 described later. Outer peripheral side installation surface 24a intersects with the rotational direction of cylindrical rotor 90.

Inner side sealing member 41 is installed on inner peripheral side installation surface 23a located on the inner peripheral side of cylindrical rotor 90 among the installation surfaces of partition plate 20. Inner side sealing member 41 extends between the pair of disks 10 from one disk (first disk 11) to the other disk (second disk 12). Inner side sealing member 41 protrudes from partition plate 20 toward radially inside of cylindrical rotor 90.

Outer side sealing member 42 is installed on outer peripheral side installation surface 24a located on the outer peripheral side of cylindrical rotor 90 among the installation surfaces of partition plate 20. Outer side sealing member 42 extends between the pair of disks 10 from one disk (first disk 11) to the other disk (second disk 12). Outer side sealing member 42 protrudes from partition plate 20 toward radially outside of cylindrical rotor 90.

In inner peripheral side flow path formation member 4, inner peripheral side curved surfaces 4b and 4c curved along the rotational direction are respectively provided at a front edge in the rotational direction of inner peripheral side opening end portion 4a located on the front side in the rotational direction of cylindrical rotor 90 and at a rear edge in the rotational direction of inner peripheral side opening end portion 4a located on the rear side in the rotational direction of cylindrical rotor 90.

In outer peripheral side flow path formation member 5, outer peripheral side curved surfaces 5b and 5c curved along the rotational direction are respectively provided at a front edge in the rotational direction of outer peripheral side opening end portion 5a located on the front side in the rotational direction of cylindrical rotor 90 and at a rear edge in the rotational direction of outer peripheral side opening end portion 5a located on the rear side in the rotational direction of cylindrical rotor 90.

As cylindrical rotor 90 rotates, inner side sealing member 41 slides with respect to inner peripheral side curved surfaces 4b and 4c, and outer side sealing member 42 slides with respect to outer peripheral side curved surfaces 5b and 5c, so that a part (first region R1) of the plurality of space portions S air-tightly communicates with inner peripheral side flow path formation member 4 and outer peripheral side flow path formation member 5.

Specifically, space portion S located between partition plate 20 between inner peripheral side curved surface 4b and outer peripheral side curved surface 5b and partition plate 20 located between inner peripheral side curved surface 4c and outer peripheral side curved surface 5c air-tightly communicates with inner peripheral side flow path formation member 4 and outer peripheral side flow path formation member 5.

In this manner, cylindrical rotor 90 is divided into first region R1 that air-tightly communicates with inner peripheral side flow path formation member 4 and outer peripheral side flow path formation member 5, and second region R2 that constitutes a flow path different from first region R1 instead of communicating with inner peripheral side flow path formation member 4 and outer peripheral side flow path formation member 5.

As illustrated in Figs. 1 and 3, a fluid is introduced into both first region R1 and second region R2. The direction in which the fluid passing through second region R2 flows and the direction in which the fluid passing through first region R1 flows are preferably opposite in the radial direction of cylindrical rotor 90.

To second region R2, the fluid is introduced from the outer peripheral side toward the inner peripheral side of cylindrical rotor 90 so that the fluid passes through central space 90a of cylindrical rotor 90 located around inner peripheral side flow path formation member 4 and flows out through opening 11a of first disk 11.

On the other hand, the fluid is introduced into first region R1 so that the fluid flows from the inner peripheral side toward the outer peripheral side of cylindrical rotor 90 after passing through inner peripheral side flow path formation member 4 passing through opening 1 1a of first disk 11.

The fluid introduced into second region R2 is a fluid to be treated such as exhaust gas. The fluid to be treated includes an organic solvent as a substance to be treated. In the second region R2, the fluid to be treated is cleaned.

At the time of cleaning, first, the exhaust gas is introduced into second region R2 of cylindrical rotor 90 from the outer peripheral side toward the inner peripheral side of cylindrical rotor 90. The exhaust gas introduced into second region R2 is cleaned when the exhaust gas passes through cylindrical rotor 90 along the radial direction by the organic solvent being adsorbed and removed by the plurality of adsorption units 30 located in second region R2.

The cleaned exhaust gas flows from second region R2 as clean air into central space 90a of cylindrical rotor 90. The clean air flowing into central space 90a of cylindrical rotor 90 passes through central space 90a of the cylindrical rotor at a portion located around inner peripheral side flow path formation member 4, and flows out from opening 11a of first disk 11. The clean air flowing out from opening 11a is discharged to the outside of treatment chamber 1 through first flow path formation member 2.

The fluid introduced into first region R1 is a heated fluid such as heated air. In first region R1, the organic solvent adsorbed by adsorption unit 30 is desorbed to regenerate adsorption unit 30 and to generate a concentrated fluid whose concentration of the organic solvent is increased.

In order to desorb the organic solvent, heated air is introduced from the other end side of inner peripheral side flow path formation member 4. The heated air introduced from the other end side of inner peripheral side flow path formation member 4 flows within of inner peripheral side flow path formation member 4 that passes through opening 11a of first disk 11, and is introduced into first region R1 from one end side of inner peripheral side flow path formation member 4.

When the heated air introduced into first region R1 passes through cylindrical rotor 90 from the inner peripheral side toward the outer peripheral side of cylindrical rotor 90, the heated air desorbs the organic solvent adsorbed to the plurality of adsorption units 30 located in first region R1 by heat. The heated air containing the organic solvent is discharged as a concentrated fluid from first region R1 to outer peripheral side flow path formation member 5. The concentrated fluid discharged to outer peripheral side flow path formation member 5 is introduced into a post-treatment device in which post-treatment such as recovery or combustion is performed.

### [Adsorption element 200]

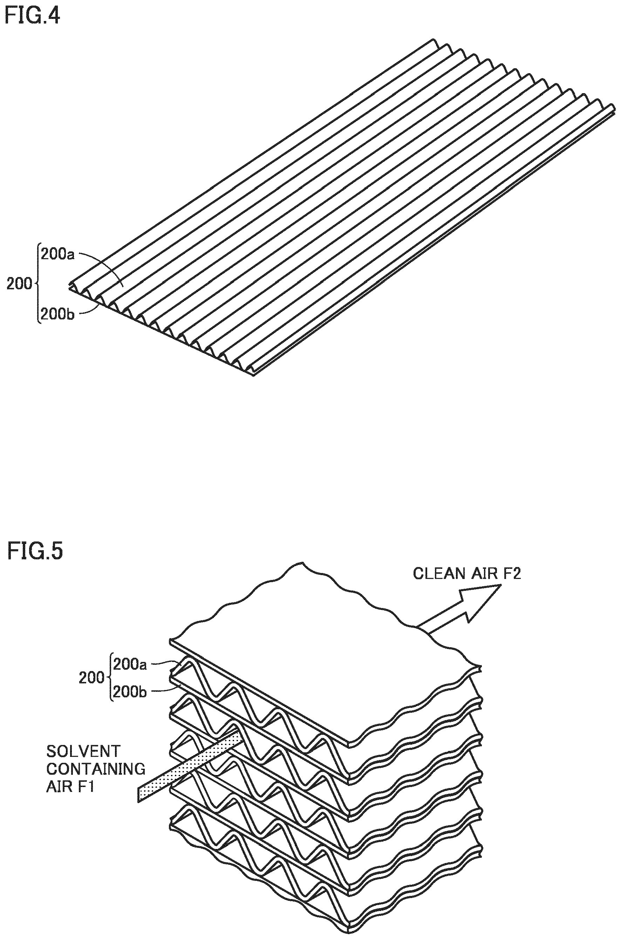

Next, a configuration of an adsorption element 200 used in adsorption unit 30 in the present embodiment will be described with reference to Figs. 4 and 5. Fig. 4 is a view illustrating a honeycomb shape which is the shape of adsorption element 200, and Fig. 5 is a partially enlarged view of the adsorption unit adopting the honeycomb shape which is the shape of adsorption element 200.

Examples of a method for manufacturing adsorption element 200 include a method of forming a sheet into a honeycomb shape by mixed papermaking, a method of attaching an adsorbent to a sheet to be a base material and then forming the sheet into a honeycomb shape using an adhesive for forming a honeycomb, a method of forming a honeycomb shape in advance with a sheet to be a base material and then attaching an adsorbent, and a method of forming a honeycomb shape using an adsorbent and other framework materials (such as an extrusion molding method, for example). However, the manufacturing method is not particularly limited.

### [Adsorption unit 30]

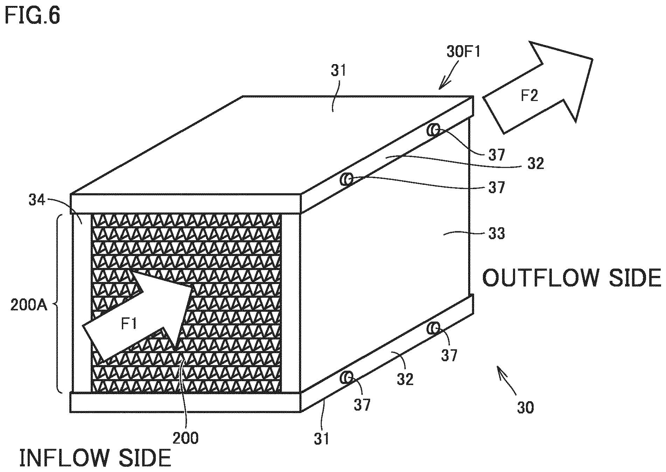

A specific structure of adsorption unit 30 according to the embodiment will be described with reference to Fig. 6. Fig. 6 is an overall perspective view of adsorption unit 30 according to the present embodiment.

Adsorption unit 30 includes plate-like adsorption elements 200 having the above-described honeycomb structure, and a frame body 30F1 that communicates the inflow side opening and the discharge side opening and holds the plurality of adsorption elements 200 laminated in a multilayer state so as to form the flow path of the fluid to be treated. A multilayer body 200A is provided by laminating adsorption elements 200 in the multilayer state.

When multilayer body 200A is provided, adsorption elements 200 may be fixed by frame body 30F1 alone, or adsorption elements 200 may be fixed to each other using an adhesive. As the adhesive, an inorganic binder can be used.

The inorganic binder is, for example, soluble in water, uniformly dispersed in the sheet, and is cured by reaction, gelation, or the like during heat treatment, and firmly fixes the adsorbent and the skeleton material during the curing. In addition, it is preferable that thermal decomposition temperature of 300°C or higher, heat of reaction is generated by a highly reactive organic solvent, catalytic properties that cause ignition and combustion of the sheet is low, and adsorption performance of the adsorbent (Ax) is less likely deteriorated by coating of the binder. For example, a phosphate-based binder such as sodium hexametaphosphate and a silicate-based binder such as silicate soda are preferable.

The inorganic binder for fixing and maintaining the adsorbent and fiber components and the inorganic binder for fixing and maintaining a flute portion 200a and a liner portion 200b constituting the honeycomb may not necessary be the same type of binder, and it is desirable to use a binder more suitable for productivity.

In the present embodiment, frame body 30F1 has a substantially box shape as a whole so as to form an inflow side opening and a discharge side opening. Flanges 34 bent inward are provided respectively for the inflow side opening and the discharge side opening of a pair of side plates 33 located on the left and right. Flanges 32 bent inward are also provided each along an entire circumference of each of lid members 31 disposed on top and bottom. Flanges 36 are also provided at both left and right ends of partition body 35 so as to stand upright from partition body 35. By providing flanges 32 and flanges 34 in this manner, it is possible to prevent adsorption elements 200 from sticking out of frame body 30F1.

It is preferable that frame body 30F 1 has a structure that can be divided when adsorption elements 200 are laminated at the time of assembly of adsorption unit 30, or when adsorption elements 200 are cleaned and replaced after assembling adsorption unit 30. In the case of joining using welding, it is difficult to divide adsorption unit 30 once the unit is assembled. In the case of screwing and bolting, it is easily possible to disassemble the unit. However, an unnecessary thickness is generated, as it is necessary to secure the volume of the screw and the bolt.

Therefore, it is preferable to use, as the fastening member, rivets 37 that can be easily disassembled and requires only a small volume. The members fixed by rivets 37 are provided with through holes in advance. When an increased volume does not provide any problem, a screw, a bolt, or the like may be used as the fastening member. In the drawings, in order to clarify positions to attach rivets 37, the rivets are illustrated with a ratio different from the actual size.

In order to increase an area of the opening of frame body 30F1, a material used for frame body 30F1 is preferably thin, while it is also necessary to maintain the strength as a structural body. It may be appropriately set in consideration of the above points. Frame body 30F1 and rivet 37 may have sufficient strength, heat resistance, chemical resistance, and the like under the conditions of use. It is preferable to use a metal material such as iron, stainless steel, or aluminum, a resin material such as acryl, bakelite, or melanin, or the like.

Adsorption unit 30 of the present embodiment may be used alone, or a plurality of adsorption units may be laminated and used.

### [Second embodiment: adsorption unit 30A]

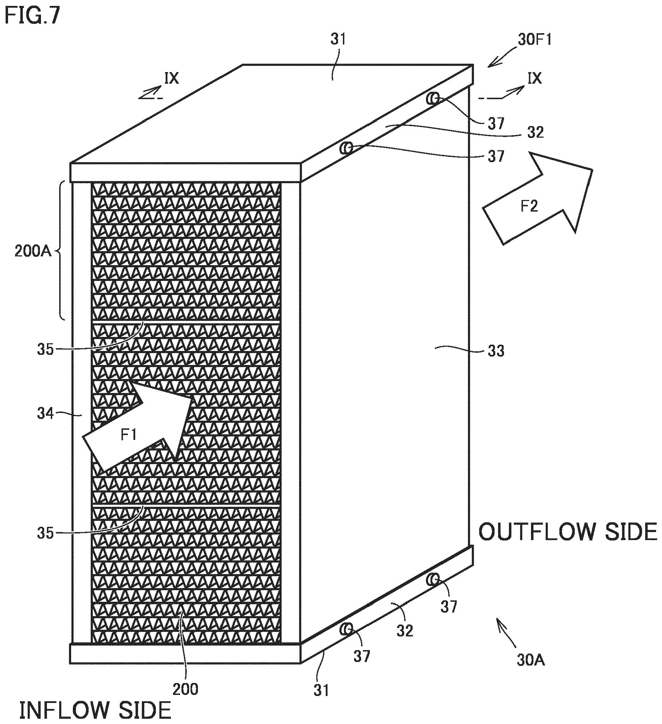

A specific structure of an adsorption unit 30A according to an embodiment will be described with reference to Fig. 7. Fig. 7 is an overall perspective view of adsorption unit 30A in the present embodiment.

An adsorption unit 30A has a larger number of laminated adsorption elements 200 than in the configuration of adsorption unit 30. In addition, a configuration in which the number of laminated layers in multilayer bodies 200A is simply increased may be adopted, but adsorption elements 200 may be damaged by contact with or rubbing between multilayer bodies 200A.

Therefore, as shown in the present embodiment, partition bodies 35 are disposed between multilayer bodies 200A. Partition bodies 35 are provided so as to extend from the inflow side opening to the discharge side opening, and divides multilayer bodies 200A. By disposing partition bodies 35, contact with and rubbing between multilayer bodies 200A can be suppressed. Furthermore, since adsorption elements 200 can also be held by partition bodies 35, the stability of the structure of laminated multilayer bodies 200A can be increased. Since multilayer bodies 200A is fixed by frame body 30F1 and partition bodies 35, adsorption elements 200 constituting multilayer bodies 200A may be or may not be fixed to each other using an adhesive.

The number of laminated layers in multilayer body 200A and the number of partition bodies 35 can be appropriately changed according to the strength and performance required for adsorption unit 30, but partition bodies 35 may be provided so as to divide the entire multilayer body into about 2 to 5 depending on the number of layers of adsorption elements 200 forming multilayer body 200A.

The material used for partition body 35 may have sufficient strength, heat resistance, chemical resistance, and the like under the same conditions of use as frame body 30F1 and the like. It is preferable to use a metal material such as iron, stainless steel, or aluminum, a resin material such as acryl, bakelite, or melanin, or the like.

### [Third embodiment: adsorption unit 30B]

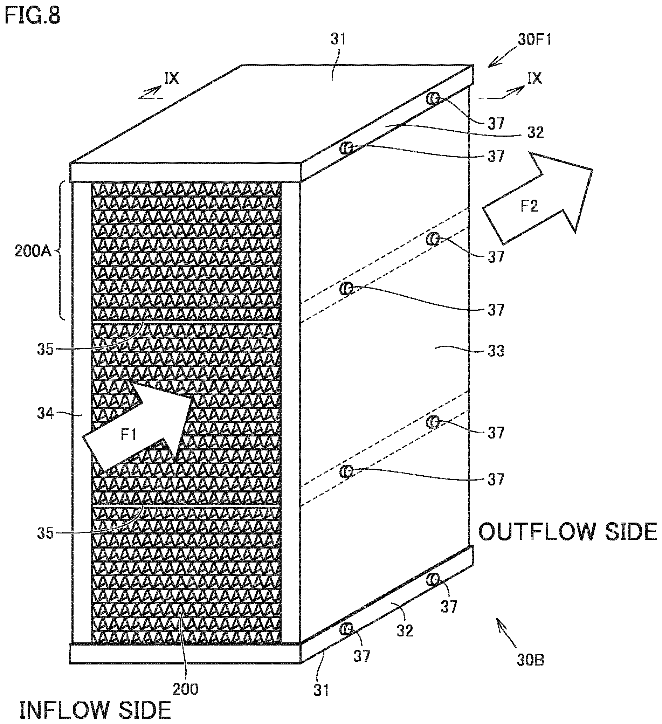

A specific structure of an adsorption unit 30B according to an embodiment will be described with reference to Fig. 8. Fig. 8 is an overall perspective view of adsorption unit 30B according to the present embodiment.

Adsorption unit 30B basically has the same configuration as adsorption unit 30A, but flanges 36 are provided at left and right ends of partition body 35 so as to stand upright from partition body 35. Side plates 33 and flanges 36 at both ends of partition body 35 are also fixed by rivets 37 as fastening members. The members fixed by rivets 37 are provided with through holes in advance.

By providing flanges 36 in this manner, partition body 35 can be fixed to side plates 33. With this, the weight of multilayer body 200A divided by partition bodies 35 can be dispersed by partition bodies 35.

### [Fourth embodiment: adsorption unit 30C]

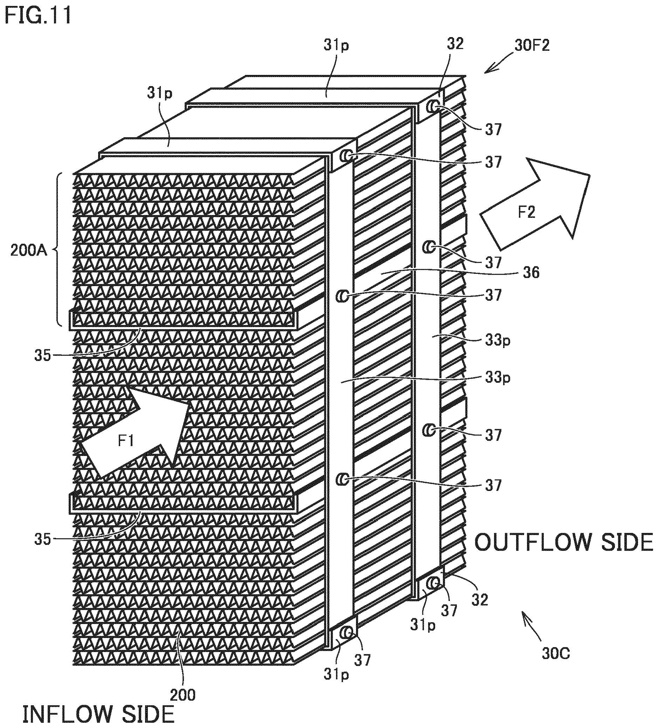

An adsorption unit 30C having another configuration will be described with reference to Fig. 11. Fig. 11 is an overall perspective view illustrating adsorption unit 30C.

Adsorption unit 30C is different from adsorption unit 30B illustrated in Fig. 8 in the configuration with from frame body 30F1. Frame body 30F2 used in adsorption unit 30C employs a belt-shaped plate. The multilayer state of multilayer body 200A and partition body 35 is the same as that of adsorption unit 30B.

Upper and lower band plates 31p are arranged on the lower surface side and the upper surface side of multilayer body 200A, and both ends of each plate are bent in an L shape to form a flange 32. On the side surface of multilayer body 200A, side band plates 33p are arranged in parallel at two locations along the flow direction from the inflow side opening to the discharge side opening.

Flanges 32 of upper and lower band plates 31p and the end portions of side band plates 33p are fastened to each other with rivets 37, and an intersecting region between flanges 36 of partition body 35 and side band plates 33p is fastened with rivets 37.

When the shift of multilayer body 200A and partition body 35 in the flow direction from the inflow side opening to the discharge side opening does not cause a problem, adopting the configuration of adsorption unit 30C facilitates the assembly of adsorption unit 30C, and the cleaning and replacement of multilayer body 200A or adsorption elements 200 after the assembly of adsorption unit 30C.

### [Fifth embodiment: adsorption unit 30D]

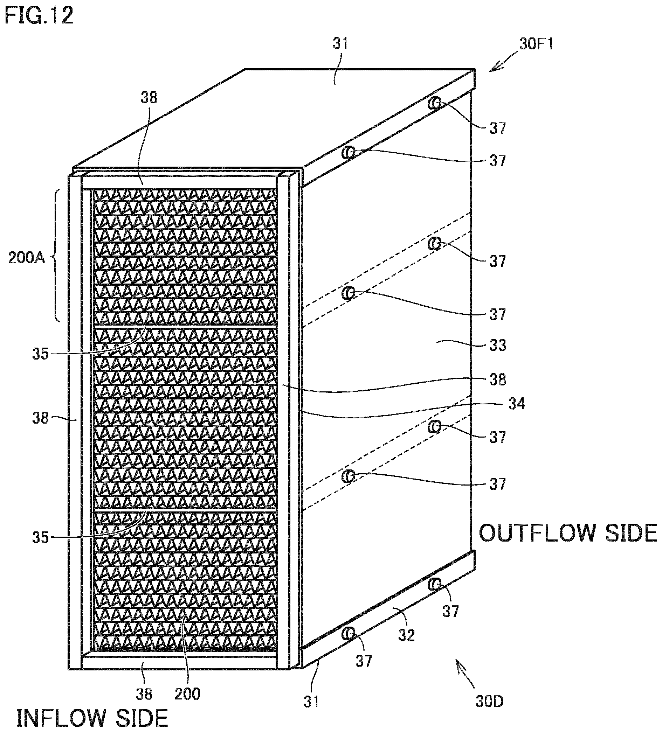

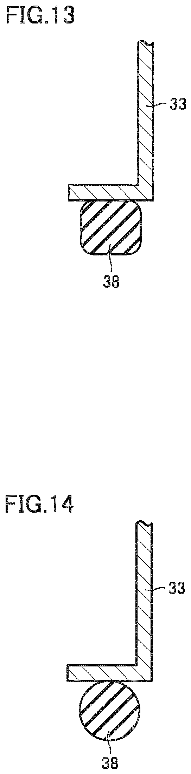

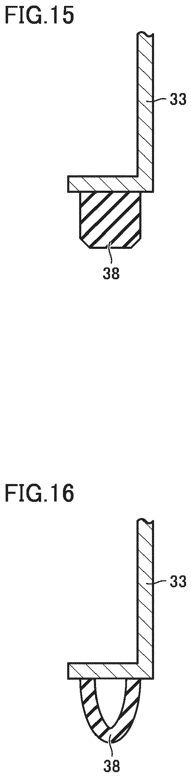

An adsorption unit 30D will be described with reference to Figs. 12 to 16. Fig. 12 is an overall perspective view illustrating adsorption unit 30D. Figs. 13 to 16 are views illustrating a transverse cross-sectional structure of a sealing member 38.

A basic configuration of adsorption unit 30D is the same as that of adsorption unit 30B illustrated in Fig. 8. The difference lies in that flange 32 and flange 34 of the inflow side opening are provided with sealing member 38 made of an elastic member in an annular shape so as to surround the opening of frame body 30F1. By providing sealing member 38, as shown in Figs. 1 to 3, it is possible to improve the sealing properties of the flow path when sealing member 38 is installed in cylindrical rotor 90 of adsorption treatment device 100.

Although adsorption unit 30D illustrated in Fig. 12 shows a case where sealing member 38 is provided only on the inflow side, any case may be employed where sealing member 38 is provided only on the discharge side and a case where the sealing member is provided on the inflow side and the discharge side.

Sealing member 38 is fixed to flange 32 and flange 34 using an adhesive or the like. Sealing member 38 is preferably an elastic member, and particularly preferably a rubber material. The rubber material may be selected in consideration of heat resistance, chemical resistance, and the like depending on the conditions of use.

Figs. 12 to 15 illustrate transverse cross-sectional shapes of sealing member 38. As sealing member 38, various cross-sectional shapes can be adopted other than those illustrated.

### [Sixth embodiment: adsorption unit 30E of another configuration]

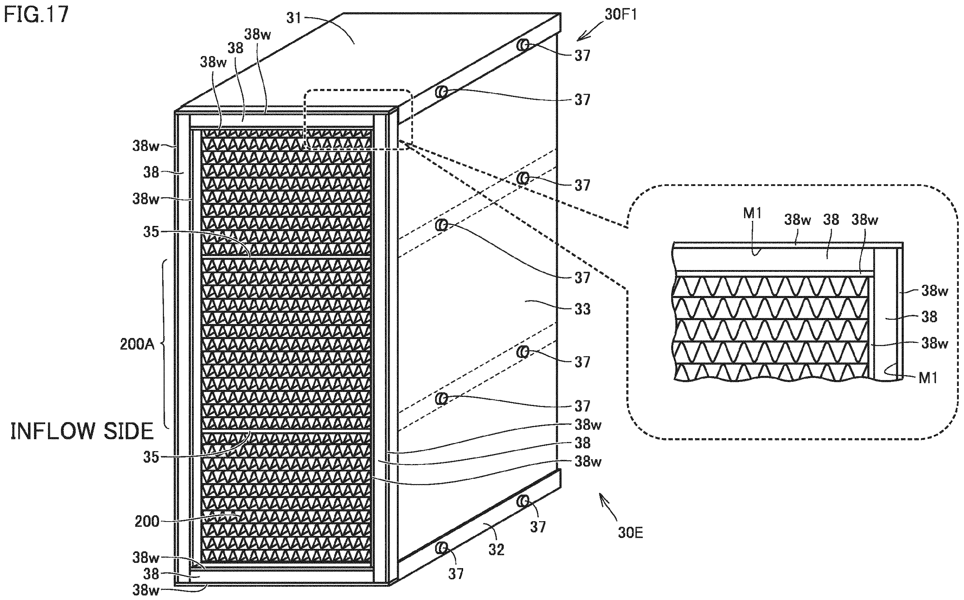

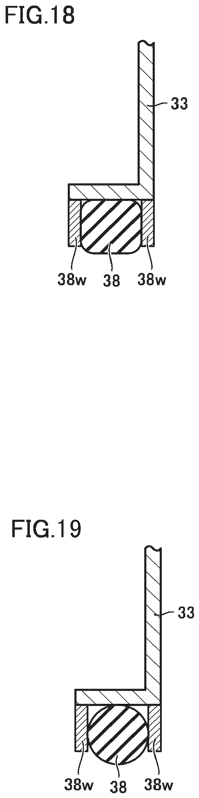

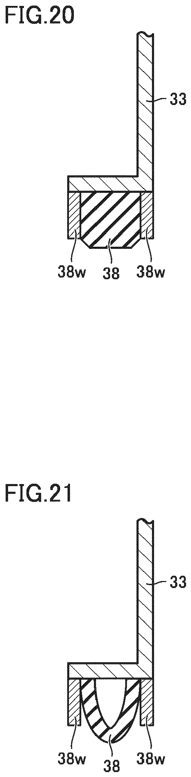

An adsorption unit 30E will be described with reference to Figs. 17 to 21. Fig. 17 is an overall perspective view illustrating adsorption unit 30E. Figs. 18 to 21 are views illustrating a transverse cross-sectional structure of an annular groove M1 and sealing member 38.

A basic configuration of adsorption unit 30E is the same as that of adsorption unit 30D illustrated in Fig. 12. The difference lies in that flange 32 and flange 34 of the inflow side opening are provided with a pair of wall portions 38w so as to provide annular groove M1, and sealing member 38 is disposed in annular groove M1. For wall portions 38w, the same material as that of frame body 30F1 is preferably used and is preferably integrated with frame body 30F1. Examples include fixation using rivets and fixation by welding. Annular groove M1 has an internal depth of about 10 mm and an internal width of about 20 mm.

Figs. 18 to 21 illustrate transverse cross-sectional shapes of sealing member 38. As with the structure illustrated in Figs. 13 to 16 described above, various cross-sectional shapes can be adopted for sealing member 38.

By disposing sealing member 38 inside annular groove M1 in this manner, displacement and breakage of sealing member 38 may be prevented. As a result, it is possible to further improve the sealing properties of the flow path when sealing member 38 is installed in cylindrical rotor 90 of adsorption treatment device 100.

### [Seventh embodiment: adsorption unit 30F]

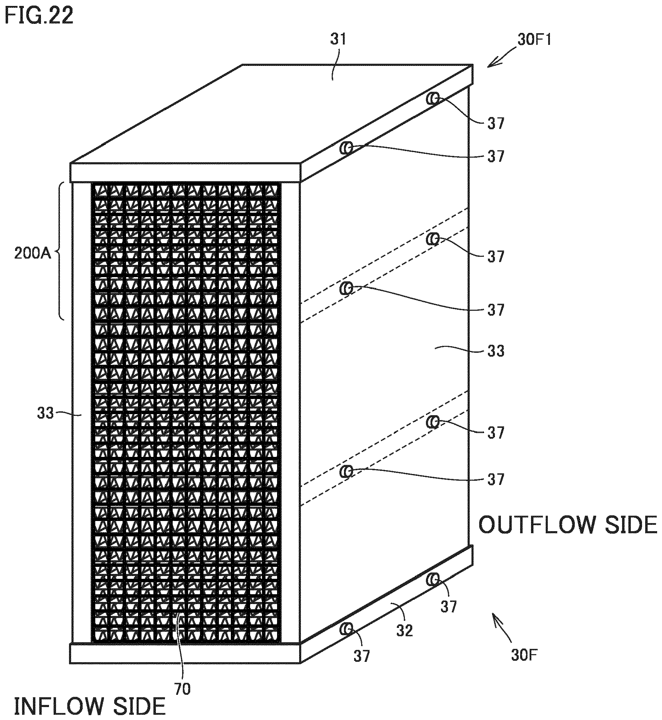

An adsorption unit 30F having another configuration will be described with reference to Fig. 22. Fig. 22 is an overall perspective view illustrating adsorption unit 30F.

Adsorption unit 30F has the same basic configuration as that of adsorption unit 30B illustrated in Fig. 8, and is different in that a protection net 70 as a protection member is provided at the inflow side opening of frame body 30F 1.

Although the present embodiment illustrates a case where protection net 70 in a lattice shape is adopted, it is possible to employ a nonwoven fabric shape, a punching board shape, or a net shape in consideration of the protection of the surface of adsorption elements 200 and performance in the passage of the fluid. It is particularly preferable to use lattice shape and net shape in the viewpoint of achieving both surface protection and performance in the passage of the fluid.

### [Examples of combination of treatment system]

It is also possible to provide a treatment system including a pre-treatment device that treats a treatment fluid before introducing the treatment fluid into adsorption treatment device 100 and/or a post-treatment device that treats a desorbed gas discharged from adsorption treatment device 100.

Examples of the pre-treatment device include a dust removing filter, a pre-adsorption unit provided with an adsorbent such as granular activated carbon, impregnated activated carbon, activated alumina, or zeolite for removing a deteriorated component of adsorption element 200, a scrubber for removing a water-soluble component, a roll filter unit for removing a coating mist, a gas cooler and/or a gas heater for adjusting the temperature and humidity of a treatment fluid, a gas cooler and/or a separator for liquefying and recovering the treatment fluid in advance, and a recovery device equipped with activated carbon for liquefying and recovering the treatment fluid in advance.

Examples of the post-treatment device include a combustion device (such as direct combustion, catalytic combustion, heat storage combustion) that performs combustion treatment of a desorbed gas discharged from adsorption treatment device 100, a gas cooler and/or a separator for liquefying and recovering the desorbed gas, a recovery device equipped with activated carbon for liquefying and recovering the desorbed gas, and a buffer device filled with an adsorbent for leveling the concentration of the desorbed gas.

One or more of these pretreatment facilities and/or post-treatment facilities may be provided according to the conditions of treatment.

The embodiments disclosed herein are illustrative in all respects and are not restrictive. The technical scope of the present invention is defined by the claims, and includes all modifications within the meanings equivalent to and the scope of the descriptions of the claims.

### REFERENCE SIGNS LIST

2: first flow path formation member, 2a, 11a: opening, 4: inner peripheral side flow path formation member, 4a: inner peripheral side opening end portion, 4b, 4c: inner peripheral side curved surface, 5: outer peripheral side flow path formation member, 5a: outer peripheral side opening end portion, 5b, 5c: outer peripheral side curved surface, 6: support member, 10: disk, 11: first disk, 12: second disk, 20: partition plate, 21: main body, 22: installation portion, 23: inner peripheral side installation portion, 23a: inner peripheral side installation surface, 24: outer peripheral side installation portion, 24a: outer peripheral side installation surface, 30, 30A, 30B, 30C, 30D, 30E, 30F: adsorption unit, 30F1, 30F2: frame body, 31: lid member, 31p: upper and lower band plates, 32, 34, 36: flange, 33: side plate, 33p: side band plate, 35: partition body, 37: rivet, 38, 40: sealing member, 38w: wall portion, 41: inner side sealing member, 42: outer side sealing member, 70: protection net, 90: cylindrical rotor, 90a: central space, 100: adsorption treatment device, 200: adsorption element, 200a: flute portion, 200b: liner portion

## Claims

1. An adsorption unit comprising:
a multilayer body in which a plurality of plate-shaped adsorption elements each having a honeycomb structure are laminated;
a frame body that communicates an inflow side opening and a discharge side opening, and holds a plurality of the multilayer bodies in a multilayer state such that a flow path of a fluid to be treated is provided.

2. The adsorption unit according to claim 1, further comprising a partition body that partitions the plurality of multilayer bodies.

3. The adsorption unit according to claim 1 or 2, wherein the multilayer body includes the adsorption elements fixed to and integrated with each other.

4. The adsorption unit according to claim 2, wherein an end portion of the partition body is fixed to the frame body using a fastening member.

5. The adsorption unit according to claim 4, wherein the fastening member is a rivet.

6. The adsorption unit according to any one of claims 1 to 5, wherein
the frame body includes a tubular frame defining the inflow side opening and the discharge side opening, and
a sealing member is annularly disposed on an end surface of at least one of the inflow side opening and the discharge side opening of the frame.

7. The adsorption unit according to claim 6, wherein a pair of wall portions are provided such that an annular groove is provided on the end surface of at least one of the inflow side opening and the discharge side opening, and
the sealing member is disposed in the annular groove.

8. The adsorption unit according to any one of claims 1 to 7, wherein the end surface of at least one of the inflow side opening and the discharge side opening is provided with a protection member that covers the inflow side opening and the discharge side opening without hindering inflow and outflow of the fluid to be treated.

9. The adsorption unit according to claim 8, wherein the protection member has a lattice shape or a net shape.

10. An adsorption treatment device comprising an adsorption unit that treats a substance to be treated contained in a fluid to be treated,
wherein the adsorption treatment device comprises
an adsorption region that causes the adsorption unit to adsorb a substance to be treated contained in the fluid to be treated; and
a desorption region for desorbing the substance to be treated adsorbed to the adsorption unit from the adsorption unit, and
the adsorption unit is the adsorption unit according to any one of claims 1 to 9.

11. The adsorption treatment device according to claim 10, wherein
the adsorption unit includes a plurality of adsorption units disposed around a rotation center, and
the plurality of adsorption units alternately move between the adsorption region and the desorption region by the adsorption units rotating annularly about the rotation center.

12. A treatment system comprising:
the adsorption treatment device according to claim 10 or 11; and
a pre-treatment device and/or a post-treatment device, the pre-treatment device treating a fluid to be treated before the fluid to be treated is introduced into the adsorption treatment device, the post-treatment device treating a desorbed gas discharged from the adsorption treatment device.
